Europäisches Patentamt

European Patent Office

Office européen des brevets

(19)

(11) Publication number: **0 279 883 B1**

# EUROPEAN PATENT SPECIFICATION

(45) Date of publication of patent specification: **13.05.92**

(51) Int. Cl.5: **A23L 1/317**, A23L 1/31, A23L 1/237, A23B 4/14, A23J 1/02, A23J 3/00

(21) Application number: **87102716.5**

(22) Date of filing: **26.02.87**

(54) **No salt, low fat diet meat product.**

(43) Date of publication of application:
**31.08.88 Bulletin 88/35**

(45) Publication of the grant of the patent:
**13.05.92 Bulletin 92/20**

(84) Designated Contracting States:
**AT DE FR GB IT NL SE**

(56) References cited:
**AU-B- 495 818**
**GB-A- 1 469 089**
**US-A- 4 478 859**

**JOURNAL OF FOOD SCIENCE, vol. 49, no. 2, March-April 1984, pages 334-336, Chicago, Illinois, US; L.O. RAO et al.: "Sensory characters of thuringer sausage extended with textured soy protein"**

(73) Proprietor: **Schnell, Karl**
**Postfach 1345**
**W-7060 Schorndorf(DE)**

(72) Inventor: **Schnell, Karl**
**Postfach 1345**
**W-7060 Schorndorf(DE)**

(74) Representative: **Patentanwälte Kohler - Schmid + Partner**
**Ruppmannstrasse 27**
**W-7000 Stuttgart 80(DE)**

EP 0 279 883 B1

**Description**

This invention relates to a low salt or salt free low fat diet meat product, more particularly to a meat product such as a sausage or salami like product.

BACKGROUND OF THE INVENTION

With the discovery that many people are allergic to various substances which are included in food products, which substances are normally considered to be safe for human consumption and also to the fact that many poeple now are more conscious of these substances and wish to have dietary foods, it has been realised that a no salt, low fat diet meat product would be very acceptable on the market.

Australian Patent No. 504,700 discloses intermediate moisture meat products having a preservation system of a primary salt selected from sodium chloride and potassium chloride, and a secondary salt selected from a group of alkali metal salts

Australian Patent Application Nr. 11768/83 is directed to a method for preparation of acidulated meat emulsions wherein a particulate acidulant comprising a solid acid core particle and a coating of water soluble starch hydrolysate or protein is added to a meat emulsion.

Australian Patent Nos. 495,818 and 513,539 disclose a method of preparing a fresh protein product with a paste containing extracted salt-soluble protein and producing a sausage therefrom.

Conventionally, meat products such as sausages require the use of salt, that is sodium chloride to be added to form the meat emulsion which is then packed into a sausage casing to ensure that the individual pieces of meat adhere together in the final product. This is due to the fact that the protein formed by the addition of the salt must form a film around each meat product so that the meat products then adhere together. It is not clear how the salt acts to extract the protein, but it appears from investigations that the salt merely acts as a caltalyst to enable the protein to be extracted to cause the meat products to adhere together.

The JOURNAL OF FOOD SCIENCE, vol. 49, no. 2, March-April 1984, pages 334-336 describes to form a sausage by extending its contend with a certain percentage of hydrated soy protein.

This document does not include any description to avoid a considerable salt amount. The addition of extra protein can provide a suitable meat product without the requirement for the addition of any salt.

The GB-A-1 469 089 describes a process for avoiding the bitter taste of potassium. Sodium salt is substituted by potassium cations. The bitter taste of the potassium cations is compensated by the addition of sweetening agents. Such substances are for exampel sodium saccharinate, potassium saccharanite, sodium cyclamate, potassium cyclamate, saccharose, glucose, lactose, and so on.

If no salt is added to the meat product, then the adhesive properties of the meat product are not obtained and it is an object of this invention to provide a no salt meat product which adheres together to form a satisfactory product.

BRIEF STATEMENT OF THE INVENTION

Thus, it is an object of this invention to provide a diet meat product formed with no added salt and of low fat composition and method for manufacturing the diet meat product.

The above object is solved by a low or salt free diet meat product having the compositions specifiting claim 1.

Claim 2 specifies a method of producing the diet meet product according to claim 1. The dependend claims 3 and 4 specify advantages developments thereof.

DESCRIPTION OF THE PREFERRED EMBODIMENT OF THE PRODUCING METHOD AND DIET MEAT PRODUCT

The meat to be used is essentially lean meat having 80 per cent C.L. at 0°C. fed to a cutting machine and then adding in powered form the protein either the soy isolate, bone protein, milk protein or blood plasma as a percentage by weight of 1.2 per cent to 3.2 per cent, preferably in the order of 2.2 per cent.

After the protein is thoroughly mixed with the meat, the other ingredients, such as seasoning, meat cure, which is known in the art, sugar in the form of thorbate dextrose, potassium chloride, citric acid and water are added to form the emulsion which is then fed into the sausage casing.

The soy isolate or milk protein or other suitable protein which can be allowable under the laws of various countries, is added to form the extra protein required to form the adhesive properties of the meat pieces. A very minute quantity of meat cure in the order of 0.001 to 0.005 per cent, preferably 0.003 per cent is added to ensure the desired colour. It has been found that with the present invention this very small quantity of meat cure only is required which is much less than required in conventional meat products.

The sugar in the form of thorbate dextrose saccharides, artificial sweeteners, or polyhydric alcohols is added in the range of 0.5 to 2.5 percent, preferably 1.5 per cent and the potassium chloride is added in the range of 0.5 to 0.9 per cent, preferably in the range of 0.7 per cent. A small quantity of citric acid and water can also be added.

Thus, it has been surprisingly found that a satisfactory meat product can be formed without adding any salt, by the provision of additional protein and the percentage of protein added can vary depending upon the meat being used. Thus, beef is normally 17 per cent protein and if this is increased by a further 3 per cent then sufficient protein is available for the formation to adhere the particles together. After the meat product has been formed it can be treated to have a suitable shelf life, this being by either heat treating at 70°C., or smoked and then heat treated and the product can then be filled into fibrous or plastic, or fibrous and plastic casings, or filled into collagen or natural casings in which they can be vacuum packed and then reheated to 72°C. Products can also be canned, in either steel or aluminium and temperatures treated to 120°C, and also can be packed in foil if desired.

Thus, surprisingly it has been found that the addition of the extra protein can provide a suitable meat product without the requirement for the addition of any salt, although the exact mechanism by which this has been achieved is not fully understood, it has been found that due to this process a satisfactory product is obtained.

As a preferred example, the ingredients comprise by weight:

| Meat or (liver plus 10% fat) | 66.0% ± 6.0% |
| Water and/or ice | 30.0$ ± 6.0% |
| Protein, selected from soy protein bone protein, milk protein or blood plasma | 2.2% ± 1.0% |
| Simple or complex saccharides, or artificial sweeteners, or polyhydric alcohols | 1.5% ± 1.0% |
| Potassium chloride or low sodium salt substitutes | 0.7% ± 0.2% |
| Phosphate or blood plasma | 0.5% ± 0.2% |
| Herbs and spices | 0.5% ± 0.2% |
| Sodium or potassium nitrites or blends thereof | 0.01% ± 0,001% |
| Ascorbic acid or erythorbic (isoascorbic) acid or its salts or glucono delta lactone | 0.1% ± 0,05% |

These ingredients may be added in the following manner to a conventional bowl cutter, multipurpose cutting machine or emulsifying machine, the protein being added first with one-third of the ice and/or water to rehydrate the protein. Tempered meat at -3° to -4°C. is then added to the rehydrated protein. After mixing the potassium chloride or low sodium salt substitute added, following by the phosphate or blood plasma and the remainder of the water and ice cut to grain size.

The saccharides or artificial sweeteners of polyhydric alcohols with the herbs and spices are then added, followed after further mixing by the sodium or potassium nitrites or blends thereof. After further mixing is added the ascorbic acid or erythorbic (iso-ascorbic) acid or its salts or glucono delta lactone.

The mixture is then fine cut or passed through an emulsifier.

The emulsion can then be canned, filled with a fibrous or plastic casing with twists or closed by clips or high frequency welding closure. The product is then cooked and held at 72°C. for twenty minutes. The cooking may be at higher temperatures or pressure cooked in an autoclave and then cooled and refrigerated until an internal temperature of 4°C. is obtained.

In a further example, the mixture may be as above but the nitrites may be omitted.

A further alternative to the process or ingredients may be prebatched into a combination machine, bowl cutter and emulsifier and blender together with the rehydrated protein and the meat.

Any meat may be used, but if other products such as liver is used, 10 percent fat must be added.

While the above includes a small amount of salt the product is virtually salt free, the small amount of salt being added for colouring purposes only.

Thus, while the invention has been particularly described with relation to beef sausages and the like, it is to be realised that it could also be utilized with other meat products, such as pork, mutton and even other meats such as kangaroo and the like.

Claims

1.  A low salt or salt free diet meat product comprising by weight:

| | |
|---|---|
| Meat | 66.000% ± 6.000% |
| Water and/or ice | 30.000% ± 6.000% |
| Soy protein or bone protein or milk protein or blood plasma | 2.200% ± 1.000% |
| Simple or complex saccharides or artificial sweeteners or polyhydric alcohols | 1.500% ± 1.000% |
| Potassium chloride or low sodium salt substitutes | 0.700% ± 0.200% |
| Phosphate or blood plasma | 0.500% ± 0.200% |
| Herbs and spices | 0.500% ± 0.200% |
| Sodium or potassium nitrites or blends of these | 0.010% ± 0.001% |
| Ascorbic acid or erythorbic (iso-ascorbic) acid or its salts or glucono delta lactone | 0.100% ± 0.050% |

2.  A method of producing the diet meat product according to claim 1, comprising the step of adding to the meat in a cutting or emulsifying machine, protein selected from soy protein, bone protein, milk protein, blood plasma, and then adding to the machine, seasoning, meat cure, potassium chloride or low sodium salt substitutes, antioxidants and water, and packaging or canning said product.

3.  The method as defined in claim 2, characterised in that the amount of added protein is used to bind the meat particles into a coherent mass.

4.  The method of producing the diet meat product as defined in claim 2 comprising the steps of rehydrating the protein with one-third of the water and/or ice in a bowl cutter, multipurpose machine or emulsifying machine, adding the precut tempered meat at -3° to -4C., then adding the salt, followed by the phosphate or blood plasma, and then followed by the remainder of the water and/or ice, adding the sweeteners and herbs and spices, and then adding the sodium or potassium nitrates or blends thereof, mixing and then adding the antioxidants, mixing and/or emulsifying and packaging or canning the product.

Revendications

1.  Produit diététique à base de viande faiblement salé ou non salé comprenant en poids :

| | |
|---|---|
| Viande | 66,000% ± 6,000% |
| Eau et/ou glace | 30,000% ± 6,000% |
| Protéine de soja ou protéine d'os ou protéine de lait ou plasma sanguin | 2,200% ± 1,000% |
| Saccharides simples ou complexes ou édulcorants artificiels ou alcools polyvalents | 1,500% ± 1,000% |
| Chlorure de potassium ou substituts de sel à faible teneur en sodium | 0,700% ± 0,200% |
| Phosphate ou plasma sanguin | 0,500% ± 0,200% |
| Herbes et épices | 0,500% ± 0,200% |
| Nitrites de sodium ou de potassium ou mélanges de ceux-ci | 0,010% ± 0,001% |
| Acide ascorbique ou acide érythorbique (isoascorbique) ou ses sels ou gluconolactone delta. | 0,100% ± 0,050% |

2.  Procédé pour produire le produit diététique à base de viande selon la revendication 1, comprenant les étapes selon lesquelles on ajoute à la viande, dans une machine à hacher ou à émulsionner, une protéine choisie parmi la protéine de soja, la protéine d'os, la protéine de lait ou le plasma sanguin, et on ajoute ensuite dans la machine de l'assaisonnement, un produit de salage de la viande, du chlorure de potassium ou des substituts de sel à faible teneur en sodium, des antioxydants et de l'eau, et on emballe ou on met en boîte ledit produit.

3. Procédé tel que défini dans la revendication 2, caractérisée par le fait que la quantité de protéine ajoutée est utilisée pour lier les particules de viande en une masse cohérente.

4. Procédé pour produire le produit diététique à base de viande tel que défini dans la revendication 2, comprenant les étapes selon lesquelles on réhydrate la protéine au moyen d'un tiers de l'eau et/ou de la glace dans un hachoir à bol, une machine à usages multiples ou une machine à émulsionner, on ajoute la viande prédécoupée et tempérée entre -3° et -4°C, on ajoute ensuite le sel, suivi par le phosphate ou le plasma sanguin, et suivi ensuite par le reste de l'eau et/ou de la glace, on ajoute les édulcorants, ainsi que les herbes et les épices, et on ajoute ensuite les nitrites de sodium ou de potassium ou les mélanges de ceux-ci, on mélange et on ajoute ensuite les antioxydants, on mélange et/ou on émulsionne, et on emballe ou on met en boîte le produit.

**Patentansprüche**

1. Salzarmes oder salzloses Fleischdiätprodukt, enthaltend in Gewichtsteilen:

| | |
|---|---|
| Fleisch | 66,000 % +/- 6,000 % |
| Wasser und/oder Eis | 30,000% +/- 6,000% |
| Sojaeiweiß oder Knocheneiweiß oder Milcheiweiß oder Blutplasma | 2,200 % +/- 1,000 % |
| Einfache oder komplexe Saccharide oder künstliche Süßstoffe oder mehrwertige Alkohole | 1,500 % +/- 1,000 % |
| Kaliumchlorid oder einen Ersatz für geringen von Natriumsalzanteilen | 0,700 % +/- 0,200 % |
| Phosphat oder Blutplasma | 0,500 % +/- 0,200 % |
| Kräuter und Gewürze | 0,500 % +/- 0,200 % |
| Kalium- oder Natriumnitrite oder Gemische davon | 0,010 % +/- 0,001 % |
| Ascorbinsäure oder Eritron-(Isoascorbin)-Säure oder deren Salze oder Gluconodeltalacton | 0,100 % +/- 0,050 %. |

2. Verfahren zur Erzeugung des Fleischdiätprodukts nach Anspruch 1, gekennzeichnet durch die Schritte: Zu dem Fleisch wird in einer Zerkleinerungs- oder Emulgiermaschine Eiweiß zugegeben, das aus Sojaeiweiß, Knocheneiweiß, Milcheiweiß, Blutplasma ausgewählt wird; dann wird der Maschine Gewürz, Fleischpökelmittel, Kaliumchlorid oder geringe Mengen Natriumsalzersatzstoffe, Antioxidiermittel und Wasser zugegeben; schließlich wird das Produkt verpackt oder in Dosen eingemacht.

3. Verfahren nach Anspruch 2, dadurch gekennzeichnet, daß die Menge des zusätzlichen Eiweißes zur Verbindung der Fleischteilchen zu einer zusammenhängenden Masse dient.

4. Verfahren zur Erzeugung des Fleischdiätprodukts nach Anspruch 2, gekennzeichnet durch die Schritte: Das Eiweiß wird mit einem Drittel des Wassers und/oder des Eises in einer Walzenzerkleinerung-, Mehrzweck- oder Emulgiermaschine rehydratisiert; das vorgeschnittene, auf -3° C bis -4° C abgeschreckte Fleisch wird hinzugefügt; dann wird das Salz zugegeben; danach das Phosphat oder das Blutplasma; dann folgt die Zugabe des verbleibenden Wassers und/oder Eises; die Süßstoffe, Kräuter und Gewürze werden hinzugefügt; dann wird das Kalium- oder Natriumnitrat oder deren Gemische zugegeben, vermischt und dann die Antioxydiermittel hinzugefügt, vermischt und/oder emulgiert; schließlich wird das Produkt verpackt oder in Dosen eingemacht.